# EUROPÄISCHE PATENTANMELDUNG

(11) **EP 3 767 146 A1**
(43) Veröffentlichungstag der Anmeldung: **20.01.2021**
(21) Anmeldenummer: 20186413.9
(22) Anmeldetag: 17.07.2020
(51) Int. Cl.: F16L 27/113, B08B 15/00, F16L 57/02

(54) **VORRICHTUNG UND VERFAHREN ZUR STABILISIERUNG VON ELASTOMEREN KOMPENSATOREN WÄHREND DER STERILISIERUNGSPHASE**

(30) Priorität: 17.07.2019 DE 102019005004
(71) Anmelder: Pharmatec GmbH, 01099 Dresden (DE)
(72) Erfinder: Cornelius, Hans-Dieter, 01277 Dresden (DE); Kretzschmar, Ralf, 01309 Dresden (DE); Hentschel, Ingo, 01796 Pirna (DE)
(74) Vertreter: DREISS Patentanwälte PartG mbB

(57) **Zusammenfassung**

Die nachfolgende Erfindung beschreibt einen Kompensator, mit dessen Hilfe beim Containment der Transfer von hochpotenten Pharmapulver durch die Dehnungszone des Kompensators vom Isolator in die Ansatzbehälter unterstützt wird. Die meisten Andocksysteme besitzen ähnliche Kompensatoren, die die fix angeordneten Baugruppen miteinander verbinden.

Der beschriebene Kompensator besteht in der Dehnungszone aus einem hochelastischen, temperaturstabilen Elastomer (1), das sich bei der axialen Dehnung zu einer rohrähnlichen Form ausbildet. Damit ist die Voraussetzung gegeben, dass sich das transferierte Pulver nicht an der Innenwand des Rohres ablagern kann.

Vor der Sterilisation wird der Kompensator (1) mittels einer Manschette (3) aus Manschettenhalbschalen umgeben, die dann den relativ großen Innendruck während der Sterilisation aufnehmen.

## Beschreibung

Die vorliegende Erfindung bezieht sich auf Kompensatoren, die zum Beispiel bei aseptischen Andockvorrichtungen eingesetzt werden. Der Kompensator ermöglicht durch seine axial und teils laterale Bewegung, dass die beim Containment fixen Schnittstellen, zwecks Transfer von pulverförmigen, hochaktiven pharmazeutischen Wirkstoffen, miteinander verbunden werden.

Zusammen mit den anderen Bauelementen solcher Andockvorrichtungen - angebracht an sog. Isolatoren - werden einerseits die Operatoren nicht mit Wirkstoffen kontaminiert bzw. nur kontrollierbaren, geringen und zeitabhängigen Dosierungen ausgesetzt und andererseits wird verhindert, dass die aus der Umwelt oder vom Operator natürlich vorhandenen Keime nicht in das Pharma-Produkt gelangen. Letzteres könnte zu schweren Komplikationen bei Patienten führen, wenn die Keime zusammen mit dem Wirkstoff als Infusion direkt in den Blutkreislauf gelangen.

In letzter Zeit werden in Isolatoren zunehmend pulverförmige Wirkstoffe für Zytostatika hergestellt und danach mit Hilfe der oben genannten Andockvorrichtungen transferiert. Es ist daher unabdingbar, dass die Transportwege, z.B. vom Isolator in die Ansatzbehälter, unter relativ hohen Temperaturen und Drücken sterilisiert werden müssen. Für den Fall, dass während des Transfers das Andocksystem den vorgegebenen OEL-Wert von <0,1 µg/m³ in beiden Kontaminationsrichtungen erfüllen muss, müssen oftmals Sterilisierungen durchgeführt werden, bei denen Temperaturen von >180°C unter Drücken von >6 bar erforderlich sind.

Weiterhin muss beachtet werden, dass sich die pulverförmigen Wirkstoffe mit ihren hohen Adhäsionskräften nicht in unzugänglichen Nischen bzw. Spalten ablagern und damit teilweise gar nicht erst in die bereitstehenden Ansatzbehälter gelangen.

### Stand der Technik

Unter den o.g. Randbedingungen, dass einerseits für den Transfer des Pulvers die benetzbare Innenfläche vom Kompensator möglichst klein und glatt bleibt, das Material konforme FDA-Bedingungen erfüllt und dass andererseits für die o.g. Sterilisierungsparameter von Temperatur und Druck ausgelegt sind, ergeben sich für die bisher wichtigsten Kompensatoren zusammengefasst folgende Vor- und Nachteile für die bisher bekannten 3 Bauarten:
1. Kompensator aus Wellrohr, beispielsweise bekannt aus der DE 10 2018 000 978 A1, hergestellt aus austenitischen Stahl oder Kunststoff, dann vorwiegend aus PTFE
   - Vorteile
      o relativ glatte Oberfläche
      o Material beständig gegenüber der o.g. Prozesstemperatur während der Sterilisation
      o konstruktive Auslegung für die o.g. Drücke ausreichend
   - Nachteile
      o bedingt durch die Hinterschnitte der Wellen relativ große Oberfläche mit schlechtem Zugang beim Reinigen und dessen Kontrolle gegenüber evtl. pulvrigen Ablagerungen.
2. Kompensator, im gestreckten Zustand eine rohrähnliche Ausführung aus einem dünnwandigen Elastomer, wie Viton, PTFE o.ä.
   • Vorteile
      ∘ relativ kleine und glatte Oberfläche
      ∘ Material beständig gegenüber der o.g. Prozesstemperatur während der Sterilisation
   • Nachteile
      ∘ eine druckstabile Ausführung während der Sterilisation ist für die o.g. Drücke nicht realisierbar.
3. mit Hilfe von zwei axial verschiebbaren Rohren, die radial zueinander mit einer Lippendichtung abgedichtet eine Schleusenkammer bilden, wird nach einer externen Sterilisierung ein Deckelverschluss, der die Schleusenkammer mit dem Ansatzbehälter verbindet, geöffnet, und das Pharmaprodukt wird vom Isolator über die entstandene Schleusenkammer in den darunter positionierten Ansatzbehälter transferiert.

Die oben genannten Ausführungen zeigen, dass es unter den genannten Randbedingungen für die Sterilisation jedoch keine optimale Lösung dafür gibt, den Transfer durchzuführen.

### Aufgabe der Erfindung

Ausgehend von der vorgenannten Bauart 2. wird ein Kompensator mit den Merkmalen des Anspruchs 1 vorgeschlagen. Insbesondere werden folgende Merkmalen vorgeschlagen, welche die o.g. Nachteile beseitigen oder zumindest minimieren:
- im angedockten Zustand formt sich der hochelastische, schlauchartige Kompensator zu einem rohrähnlichen, dünnwandigen Rohr, dessen Innenwand dann eine ebene, glatte Oberfläche aufweist, damit das hochpotente Pharmapulver ohne Hindernisse problemlos z.B. vom Isolator in den darunter positionierten Ansatzbehälter gelangt und/oder
- der Kompensator besteht aus einem Elastomer, das die FDA-Bedingungen erfüllt und/oder
- während der SIP-Sterilisation sind trotz des dünnwandigen, elastomeren Rohres folgende Prozessparameter noch realisierbar:
   ▪ Temperatur =< 180°C
   ▪ Druck =< 10 bar.

### Beschreibung der Erfindung

Bevor die Sterilisierung erfolgt, wird erfindungsgemäß der elastische Teil des Kompensators mit einer Manschette, bestehend aus zwei Halbschalen, umhüllt. Die Manschette ist vorzugsweise bis zu Drücken von 10 bar ausgelegt. Was die Temperaturbelastung anbetrifft, so gibt es Elastomere (u.a. Silikon), die bei der relativ hohen Temperatur von 180°C noch formstabil und elastisch bleiben, wenn die bei der Sterilisierung entstehenden Drücke von der umgebenen Manschette aufgenommen werden. Andererseits würden infolge der hohen Drücke und Temperaturen der Kompensator während der Sterilisation zerstört werden.

Nach Ablegen der angelegten Manschettenhalbschalen bleiben die Vorteile des Kompensators während des Containments erhalten, und die o.g. Randbedingungen sind damit erfüllt.

Die erfindungsgemäßen Manschetten sind so ausgelegt, dass sie problemlos und schnell um den elastischen Teil / das Rohr des Kompensators vor der Sterilisierung angelegt werden können. Diese Anlage kann bezogen auf das Rohr mit einer axialen Fügerichtung erfolgen oder vorzugsweise in einer bezogen auf das Rohr radialen Richtung, was eine Montage auch dann erlaubt, wenn der Kompensator bereits mit beiden Enden mit jeweils einer angrenzenden Baugruppe, insbesondere einem Behälter, verbunden ist.

Veränderungen an den handelsüblichen Kompensatoren sind dabei nicht notwendig, nur die Manschette muss so ausgelegt sein, dass die Außenflächen des Kompensators an der Innenseite der Manschette anliegen. Geringfüge Abweichungen spielen dabei keine besondere Rolle, da z.B. eine geringförmige Ausdehnung des Kompensators infolge Druck im Inneren bis zur Berührung mit der Manschette keinerlei Nachteile auslöst.

Die Manschette besteht beispielsweise ganz oder vorwiegend aus metallischen Halbschalen, die nach dem Anlegen um den Kompensator vorzugsweise mit einer Tri-Clamp-Klammer oder mit einer Mehrzahl von Tri-Clamp-Klammern zu einem quasi stabilen Rohr gefügt werden. Aus Gewichtsgründen wäre bei der Montage der Manschettenschalen auch von Vorteil, wenn diese aus faserverstärkten Kunststoffen hergestellt sind. Anstelle von Tri-Clamp-Klammern ist es auch denkbar, andere Befestigungselemente zu verwenden, bspw. Rohrschellen. Aus hygienischen Gründen sind jedoch Tri-Clamp-Klammern besonders bevorzugt.

Mit zunehmend axialer Längenausdehnung des Kompensators wird eine erhöhte Anzahl von Manschettenhalbschalen längs der Zentralachse notwendig, da mit zunehmendem Abstand zum Tri-Clamp und abhängig von der Höhe des zu erwartenden Innendruckes ein Biegemoment entsteht, dass die Manschettenhalbschalen längs der Zentralachse aufdrücken könnte.

Eine erhöhte Anzahl von axial angeordneten Manschettenhalbschalen zu einem Rohr ist dann nicht zwingend erforderlich, wenn mittig zwischen den Tri-Clamps ringförmige, temperaturstabile Spannbänder um die Manschettenhalbschalen angelegt sind oder werden. In Abhängigkeit vom Innendruck reichen dabei oftmals schon temperaturstabile Spannbänder, beispielsweise bekannt als Klettverschlüsse, aus.

Die Erfindung betrifft ferner ein Verfahren zur Stabilisierung eines Kompensators. Vorteile und Ausgestaltungen des Verfahrens wurden bereits vorstehend unter Bezugnahme auf die erfindungsgemäße Vorrichtung erläutert.

Weitere Merkmale und Vorteile der Erfindung sind Gegenstand der nachfolgenden Beschreibung und der zeichnerischen Darstellung bevorzugter Ausführungsbeispiele.

In der Zeichnung zeigt:
- Figur 1: eine Seitenansicht eines Kompensators in geschnittener Darstellung ohne Manschette und bei Anordnung des Kompensators an einem ersten Behälter;
- Figur 2: eine der Figur 1 entsprechende Ansicht mit angelegten Manschettenhalbschalen;
- Figur 3: eine der Figur 1 entsprechende Seitenansicht bei Anordnung des Kompensators zwischen dem ersten Behälter und einem zweiten Behälter;
- Figur 4: eine der Figur 3 entsprechende Ansicht mit angelegten Manschettenhalbschalen.

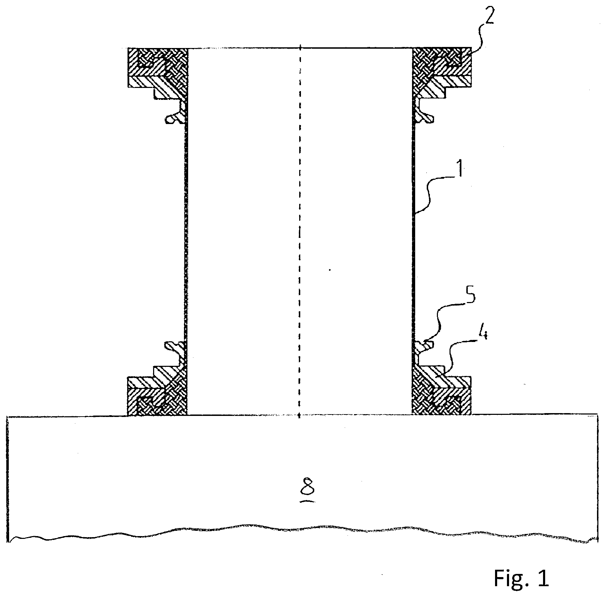

Gemäß Fig. 1 besteht der Kompensator aus einem elastomeren Rohr 1 und zwei Ringflanschen 2 aus vorwiegend austenitischem Stahl zum axialen Verbinden an die benachbarten Baugruppen (in der Zeichnung schematisch dargestellt), wenn diese in der Pharmaindustrie zum Einsatz gelangen. Diese Baugruppen umfassen einen ersten Behälter 8, beispielsweise in Form eines Ansatz- oder Transportbehälters 8, und einen zweiten Behälter 9, beispielsweise in Form eines Isolators.

In einem in Fig. 1 dargestellten Ausgangszustand ist der Kompensator zunächst nur mit dem ersten Behälter 8 verbunden. Der Kompensator ist Teil eines beispielsweise aus der DE 10 2018 000 978 A1 bekannten Andocksystems zur fluidwirksamen Verbindung der Behälter 8 und 9. Die weiteren Teile eines solchen Andocksystems sind nicht erfindungswesentlich und sind in der Zeichnung nicht dargestellt.

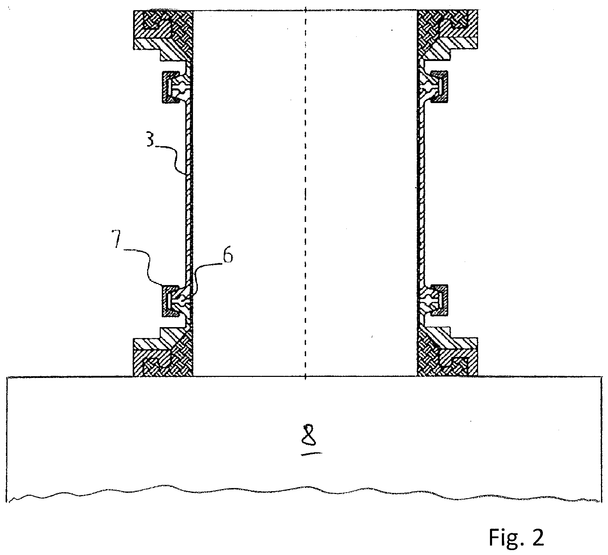

Weiterhin zeigt Fig. 1 die Situation, wie der Kompensator für das Anlegen der Manschettenhalbschalen 3 gemäß Fig. 2 vorbereitet wurde. Dazu wurden zwei rohrförmige Flansche 4 angebracht, die zusammen mit den beiden Ringflanschen 2 bei der späteren Montage an die benachbarten Baugruppen mit angeschlossen werden. Damit wird erreicht, dass sich später die Manschettenhalbschalen 3 gemäß Fig. 2 mit minimalem Aufwand anlegen lassen.

An den rohrförmigen Flanschen 4 befindet sich eine Tri-Clamp-Anschlusskontur 5, die es ermöglicht, dass die bekannten und genormten Tri-Clamp-Klammern 7, das Verbinden der Manschettenhalbschalen 3, gemäß Fig. 2 zu einem umschließenden Rohr bzw. den axialen Anschluss an den rohrförmigen Flansch 4, ermöglichen. Die gleiche Tri-Clamp-Anschlusskontur 5 befindet sich auch an den Manschettenschalen 3.

In dem angelegten und fixierten Zustand der Manschettenhalbschalen 3 und in dem nur mit dem ersten Behälter 8 verbundenen Zustand des Rohrs 1 erfolgt eine Sterilisation mit einer hohen Temperatur von bspw. > 180°C und mit einem hohen Druck von beispielsweise > 6 bar. Dabei ist das Rohr 1 an seinem dem Behälter 8 abgewandten Ende mit einer an sich bekannten Klappe eines beispielsweise aus der DE 10 2018 000 978 A1 bekannten Andocksystems verschlossen.

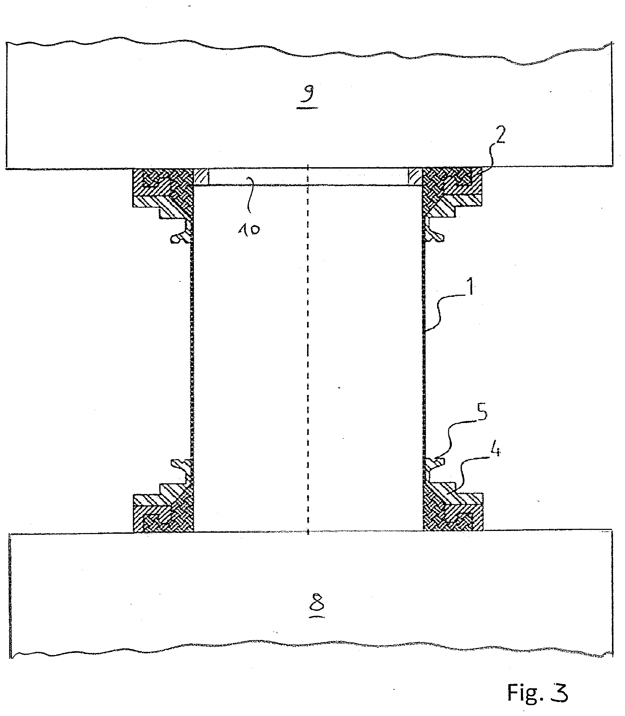

Insbesondere im Zustand nach Fig. 1 und 3 (also ohne angelegte und fixierte Manschettenhalbschalen 3) läßt sich der Kompensator mit dem elastomeren Rohr 1 in axialer und in teilweise lateraler Richtung bewegen bzw. dehnen, um die vorgegebenen fixen Positionen zu erreichen und zu verbinden. Diese fixe Position ist beispielsweise durch einen Anschlussbereich des zweiten Behälters 9 definiert (vgl. Fig. 3). Dieser Anschlussbereich kann beispielsweise durch einen schulterförmigen Ansatz 10 gebildet sein.

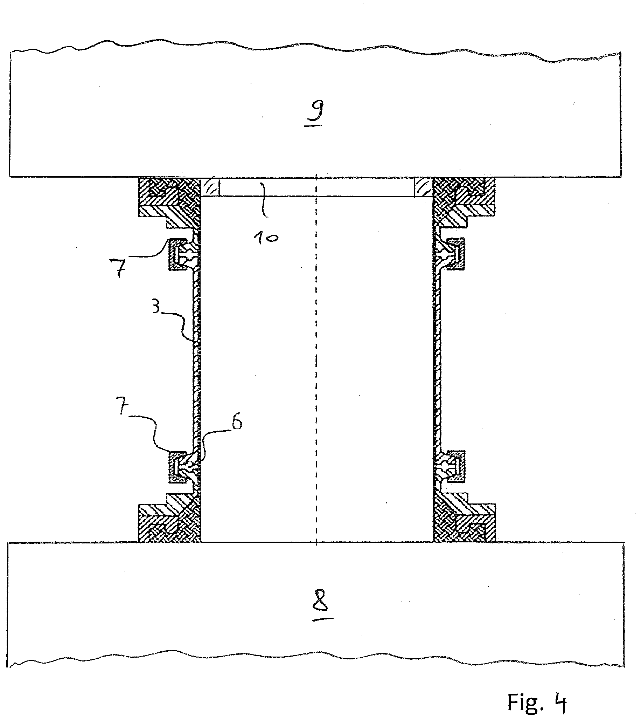

In einem durch den Kompensator verbundenen Zustand der Behälter 8 und 9 ist eine fluidwirksame Verbindung zwischen diesen Behältern und unter Zwischenschaltung des Kompensators hergestellt. Unter einem Fluid werden Gase, Flüssigkeiten oder pulverförmige Stoffe verstanden. Die fluidwirksame Verbindung ermöglicht einen Transport beispielsweise pulverförmiger, hochaktiver pharmazeutischer Wirkstoffe aus dem zweiten Behälter 9 in den ersten Behälter 8 hinein. In diesem Zusammenhang ist es bevorzugt, wenn der zweite Behälter 9 oberhalb des Kompensators ist und wenn der erste Behälter 8 unterhalb des Kompensators angeordnet ist. Ein Transport von Fluid aus dem zweiten Behälter 9 in den ersten Behälter 8 hinein kann bei nicht angelegten Manschettenhalbschalen 3 (vgl. Fig. 3) oder bei angelegten und fixierten Manschettenhalbschalen 3 (vgl. Fig. 4) erfolgen.

Der Kompensator mit dem elastomeren Rohr 1 lässt sich auch dann in axialer und in teilweise lateraler Richtung bewegen bzw. dehnen, um die vorgegebenen fixen Positionen zu erreichen und zu verbinden, wenn die Manschettenhalbschalen 3 zwar angelegt sind, aber noch nicht so befestigt / fixiert sind, dass sie eine Abstützwirkung für das Rohr 1 entfalten. Dabei ist es möglich, dass (bspw. ausgehend von dem in Fig. 4 dargestellten Zustand) insbesondere eine zu dem zweiten Behälter 9 benachbarte Tri-Clamp-Klammer 7 gelöst wird, um eine Ausgleichsversatzbewegung des elastomeren Rohrs 1 in einem zu dem Behälter 9 benachbarten Bereich zu ermöglichen. Nach erfolgreichem Ausgleich des Versatzes kann die gelöste Tri-Clamp-Klammer 7 wieder angezogen / geschlossen werden.

Um während eines Transports eines Fluids (insbesondere eines Pulvers) zwischen den Behältern 8 und 9 eine sterile Umgebung für das Fluid zu gewährleisten, wird der Kompensator, wie vorstehend unter Bezug auf Figuren 1 und 2 beschrieben, vor der Herstellung einer Transportverbindung zwischen den Behältern 8 und 9 einer hohen Temperatur von bspw. > 180°C und einem hohen Druck von beispielsweise > 6 bar ausgesetzt. Dabei ist der Kompensator - wie vorstehend beschrieben - während der Sterilisation bereits einenends mit dem ersten Behälter 8 verbunden. Es ist aber auch möglich, dass während einer Sterilisation der Kompensator nur mit dem zweiten Behälter 9 verbunden ist. Ferner ist es möglich, dass eine Sterilisation erfolgt, während der Kompensator sowohl mit dem ersten Behälter 8 als auch mit dem zweiten Behälter 9 verbunden ist (vgl. Fig. 4).

Während einer Sterilisation (auch "SIP = Sterilization in Place") ist das elastomere, dünnwandige Rohr 1 durch Auswahl eines geeigneten Elastomermaterials (bspw. eines Silikonmaterials) zwar in der Lage, die genannten hohen Temperaturen ohne Schädigung zu überstehen, allerdings nicht bei gleichzeitiger Beaufschlagung mit dem genannten Innendruck.

Fig. 2 und 4 zeigen die angelegten und fixierten Manschettenhalbschalen 3; sie verhindern, dass der Kompensator mit seinem relativ dünnwandigen, elastomeren Rohr 1 während der Sterilisation infolge der Druckunterschiede zerstört werden kann. Beim Anlegen der Manschettenhalbschalen 3 sollte das elastomere Rohr 1 geringfügig in axialer Richtung, z.B. bei einem Durchmesser von 100 mm um ca. 5 mm, gestreckt werden. Damit wird erreicht, dass die Position der aufgelegten Tri-Clamp-Dichtung 6 beim waagerechten Einschieben der Manschettenschalen 3 nicht verändert wird.

Gegenüber dem eigentlichen vorgesehenen Einsatzfall soll mit der Tri-Clamp-Dichtung 6 verhindert werden, dass beim Festziehen mittels der Tri-Clamp-Klammer 7 die Haftreibung gegenüber den steifen Oberflächen indirekt erhalten bleibt und damit ein unkontrolliertes Lösen der Tri-Clamp-Verbindung bei wechselnder Belastung erschwert wird.

Wie erwähnt besteht die Möglichkeit, dass bei der Verwendung von axial relativ langen Manschettenhalbschalen 3 bzw. hohen Drücken zusätzlich temperaturbeständige Spannbänder mittig angebracht werden.

Die angelegten und fixierten Manschettenhalbschalen 3 haben - zusätzlich zu ihrer Abstützfunktion während einer Sterilisation - auch eine mechanische Schutzfunktion für das Rohr 1, und zwar insbesondere während eines Transports von Fluid aus dem zweiten Behälter 9 in den ersten Behälter 8 hinein (vgl. Zustand gemäß Fig. 4).

## Patentansprüche

1. Vorrichtung zur Stabilisierung eines Kompensators während einer SIP-Sterilisation, wobei der Kompensator ein dünnwandiges, elastomeres Rohr (1) umfasst, **dadurch gekennzeichnet, dass** das Rohr (1) mit einer Manschette umgeben ist, wobei die Manschette aus mindestens zwei Manschettenhalbschalen (3) besteht, die insbesondere mit Hilfe mindestens einer Tri-Clamp-Klammer (7) zu einem stabilen Rohr verbunden sind.

2. Vorrichtung nach Anspruch 1, **dadurch gekennzeichnet, dass** bei axial überlangen Manschettenschalen (3) zusätzlich mittig angebrachte, temperaturbeständige Spannbänder für das Zusammenfügen der Manschettenhalbschalen (3) vorgesehen sind.

3. Vorrichtung nach einem der vorstehenden Ansprüche, **dadurch gekennzeichnet, dass** die Manschette bezogen auf das Rohr (1) in radialen Richtungen mit dem Rohr (1) fügbar und von dem Rohr (1) abnehmbar ist.

4. Verfahren zur Stabilisierung eines Kompensators während einer SIP-Sterilisation, wobei der Kompensator ein dünnwandiges, elastomeres Rohr (1) umfasst, **dadurch gekennzeichnet, dass** das Rohr (1) mit einer Manschette umgeben wird, wobei die Manschette aus mindestens zwei Manschettenhalbschalen (3) besteht, die insbesondere mit Hilfe mindestens einer Tri-Clamp-Klammer (7) zu einem stabilen Rohr verbunden werden.

5. Verfahren nach Anspruch 4, **dadurch gekennzeichnet, dass** bei axial überlangen Manschettenschalen (3) zusätzlich temperaturbeständige Spannbänder für das Zusammenfügen der Manschettenhalbschalen (3) mittig angebracht werden.

6. Verfahren nach Anspruch 4 oder 5, **dadurch gekennzeichnet, dass** die Manschette bezogen auf das Rohr (1) in radialen Richtungen mit dem Rohr (1) gefügt und/oder von dem Rohr (1) abgenommen wird.
